# EUROPEAN PATENT APPLICATION

(11) **EP 0 770 499 A1**
(43) Date of publication of application: **02.05.1997**
(21) Application number: 96307732.6
(22) Date of filing: 25.10.1996
(51) Int. Cl.: B41M 5/38, B05D 3/06, G11B 5/706

(54) **Method of forming layer on substrate and article formed thereby**

(30) Priority: 26.10.1995 GB 9521945
(71) Applicant: Columbia Ribbon Manufacturing Company Limited, Warley, West Midlands B66 2LB (GB)
(72) Inventor: Davidson, Robert Stephen, London N1 6LD (GB); Merritt, Laura Petra, Bexley Heath, Kent DA7 4TB (GB); Bradley, Grant, Whitstable, Kent CT5 4PW (GB)
(74) Representative: Loughrey, Richard Vivian Patrick

(57) **Abstract**

A substrate (20) having a coating (26) thereon is manufactured by applying a layer (23) of material in an uncured fluid state and then subjecting the layer of uncured material to light radiation (31) to effect curing of the layer of uncured material and conversion of the uncured material to a layer (26) of cured material in a non-fluid state. The light radiation may include an ultra violet component and heat resulting from the curing of the material may be removed from the substrate by a heat sink. The material may comprise a matrix containing particles of pigment or of magnetisable material. The formulation of the matrix is based on monomers with which one or more optically sensitive initiators are mixed.

## Description

This invention relates to the forming of layers on substrates and in particular to forming layers containing pigment or magnetic particles, or both pigment and magnetic particles on a substrate to form respectively ink transfer ribbons for use in printing and magnetic recording medium.

In known methods of forming ink ribbons or magnetic recording medium, material containing respectively ink pigment or magnetic particles is deposited in a layer of uniform thickness on the substrate by coating apparatus. The material normally is in a solid state and, in order to enable flowing of the material onto the substrate, the material is treated with a solvent to place it in a fluid state. The coated substrate is then subjected to heat to evaporate the solvent from the deposited layer so as to leave a solid uniform layer containing the ink pigment and/or magnetic particles. Generally the solvent evaporated from the layer is driven off and lost to the atmosphere. This results in atmospheric pollution and not only is undesirable but more and more is becoming subject to legislation requiring measures to be taken to reduce or totally prevent such pollution. The one time only use of the solvent imposes a cost on production of the coated substrate and pollution reducing or prevention measures are costly to implement. Accordingly it is desired to utilise a method of forming layers on substrates which does not require the use of solvent.

According to a first aspect of the invention a method of manufacturing a substrate coated with a layer of material includes the steps of applying a layer of said material in an uncured fluid state; said material having an un-cured fluid state and being capable of being cured to a non-fluid state; and subjecting the layer of said un-cured material on said substrate to light radiation from a source to effect curing of the material and conversion of the layer of material from said fluid state to said non-fluid state.

The method in accordance with the invention is particularly useful in the manufacture of ink ribbons in which the layer of material is loaded with ink which may impart visual or other properties to an article on which the material of the layer is deposited. The material may be loaded such that it imparts more than one such property.

The method in accordance with the invention is also useful in the manufacture of magnetic recording medium in which the layer of material is loaded with magnetic particles.

The level of loading of ink pigment or of ink pigment and magnetic particles may be of such a magnitude as to inhibit penetration of the light radiation through the thickness of the layer of material and the layer of material includes an initiator to enhance curing of the material throughout the thickness of the layer.

According to other aspects, the invention includes coated substrates manufactured in accordance with the method defined hereinbefore and specifically includes ink ribbons for use in printing processes and magnetic recording medium manufactured in accordance with the method defined hereinbefore.

The invention will now be described in more detail by way of example with reference to the drawings in which:-
Figure 1 illustrates diagrammatically steps in a known method of forming a layer on a substrate, and
Figure 2 illustrates diagrammatically steps in a method of forming a layer on a substrate in accordance with the present invention.

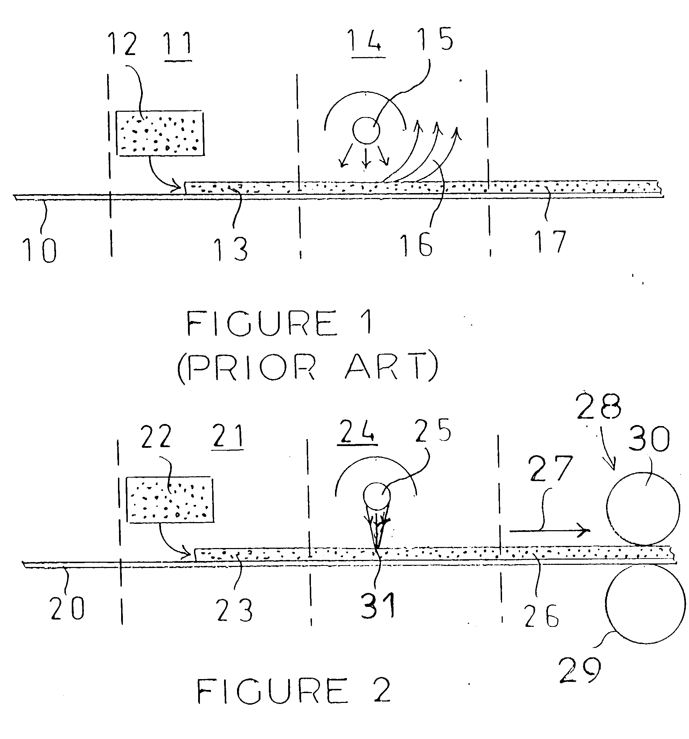

Referring first to Figure 1, in a known method of manufacturing ink ribbons consisting of a layer of pigment containing material carried on a flexible substrate, a web of substrate 10 of, for example polyester, is fed into and through a coating station 11 where material 12 for the pigment containing layer is deposited as a layer 13 of uniform thickness on the upper surface of the substrate web. The material 12 comprises a matrix of a substance which normally has a solid state but which is mixed with a solvent to make the substance fluid and containing, in the case of manufacturing ink ribbons, fine particles of ink pigment. After deposition of the layer 13 on the substrate, the coated web of substrate is fed through a heating station 14 where the layer 13 of material is subjected to heating by means of heating element 15. The heating of the layer is sufficient to cause evaporation 16 of the solvent from the layer and hence to leave a layer 17 of solid material of substantially uniform thickness adhered to the substrate 10. As discussed hereinbefore, the evaporated solvent is lost to atmosphere and results in atmospheric pollution. Furthermore since the solvent evaporated in the heating stage is lost, the provision of solvent is a continuing cost in the manufacturing process. Due to the current increasing concern regarding atmospheric pollution there is a requirement to decrease such pollution. While this is beneficial as regards pollution the meeting of such requirements imposes substantial additional costs on the manufacturing process which would only partially be offset by any reclamation and re-use of the solvent evaporated in the heating stage.

The method of manufacturing coated substrate in accordance with the present invention totally eliminates any pollution due to evaporation to atmosphere of solvent as occurs in the known method.

Referring now to Figure 2, a web of substrate 20 is fed to and through a coating station 21 in the direction of arrow 27, by feeding means 28 shown as a feed roll 29 and pinch roll 30, where material 22 for the pigment containing layer is deposited as a layer 23 of uniform thickness on the upper surface of the substrate web. The material 22 comprises a matrix of fluid material containing, in the case of manufacturing ink ribbons, fine particles of pigment. After deposition of the layer 23 on the substrate, the coated web of substrate is fed, by the feeding means 27, through an irradiation station 24 where the layer 23 of material is exposed to the action of light emanating from a light source 25. The material forming the matrix of the layer 23 is sensitive to the light such that the fluid material is cured and forms a layer 26 of non-fluid material carried on the substrate.

Ink ribbons are required for transferring ink pigment, or other materials having a property which can be recognised, in the layer 26 carried on the substrate 20 of a ribbon onto a surface, for example of a paper sheet, in a printing process to produce a recognisable image or pattern. The image or pattern may be visually recognisable or may be recognisable by other properties of the transferred material. Thus for example ribbons are also required for transferring magnetic particles or ink pigment and magnetic particles in the coating layer onto a surface in a printing process. The provision of magnetic particles is required for printing magnetically readable characters such as are used when information printed on documents is required to be read automatically by character recognition apparatus. Typical of a system in which ribbon containing particles which can form visually or optically as well as magnetically recognisable characters is used, is a system for automatic processing of bank cheques where it is required that the printed characters may be read both visually by persons handling the cheques and by automatic apparatus for handling and processing information printed on the cheques.

In order to obtain a desired optical density of the printed characters the pigment is in the form of fine particles evenly distributed substantially uniformly throughout the deposited layer and the loading of pigment in the matrix material is required to be approximately 10% or higher by weight. Similarly, to enable reliable magnetic reading of the characters by automatic recognition apparatus, the magnetic material is in the form of fine particles distributed substantially uniformly throughout the deposited layer and the loading of the magnetic particles in the matrix material is required to be approximately 35% to 40 % or higher by weight. This relatively high loading of pigment particles, magnetic particles or pigment and magnetic particles impedes or prevents penetration of the light radiation from the light source through the thickness of the deposited layer and hence curing of the matrix material throughout the thickness of the layer tends to be inhibited.

The formulation of the matrix material is based on monomers with which one or more optically sensitive polymerisation initiators are mixed. Upon being subjected to light radiation from the light source, the monomer aided by the polymerisation initiator is polymerised and cured to form a completely cured stable layer supported on the substrate. It is preferred that the formulation of the matrix material is based on an acrylate, for example mono-acrylate or methacrylate.

Generally the ribbon is supplied to a user of printing apparatus wound on a reel which may be an open reel or a reel contained within a cassette for ease of handling of the ribbon. The reel may be provided with end cheeks to retain the ribbon or may be open ended. It is desirable to contain as long a length of ribbon on the reel as is practicable so that replacement of the ribbon is required less frequently. Accordingly the substrate on which the pigment layer is carried is required to be as thin as is practicable subject to a requirement that the substrate does not fracture during feeding of the ribbon from the reel to a printing station and then to a take-up reel. In order to meet these requirements it is preferred to use a web of thin polyester or polythene. Thin webs of these materials are liable to be damaged by the action of heat. It will appreciated that the light source will, in addition to radiation of light, also radiate heat. In addition the polymerisation process of the matrix material of the deposited layer also generates heat. Thus the substrate will be subjected to heating both as a result of radiation of heat from the light source and from the action of the polymerisation process. The source of light radiation may be chosen to be of a type which generates and radiates a relatively low level of heat, however the heating due to the action of polymerisation of the matrix material is still present. Accordingly to reduce any rise of temperature of the substrate during feeding of the coated substrate through the radiation station past the source of light, the rear of the substrate is maintained in intimate heat transfer relationship with a heat sink. The heat sink may in the form of a fixed plate but it is preferred to use a rotatable roller.

If desired, in addition to the optically sensitive polymerisation initiator, the matrix material may include a thermal initiator responsive to heat generated in the deposited layer to aid curing of the matrix material of the deposited layer.

The ink ribbon may be required for use in impact printing where a printing element is projected at the rear surface of the ribbon, that is to say against the substrate, while the ink containing layer is adjacent a print receiving surface. The impact of the print element against the rear of the ribbon causes transfer of a portion of the ink layer in the region of the impact from the substrate to a print receiving surface. Alternatively the ink ribbon may be required for use in thermal transfer printing in which the rear of the ribbon is fed in contact with a thermal print head having a line of thermal printing elements and a print receiving surface is fed at the same speed as the ribbon in intimate engagement with the ink layer of the ribbon. The engagement of the print receiving surface with the ink layer and the rear surface of the ribbon with the thermal printing elements of the print head is usually accomplished by means of a pressure roller. Selective heating of the thermal printing elements causes portions of ink layer adjacent the heated elements to adhere to the print receiving surface such that when the ribbon is peeled from the print receiving surface, the portions of ink layer remain adhered to the print receiving surface. The properties of the ink layer may be varied by variation of the formulation of the matrix material and by variation of the speed at which the coated substrate is fed through the radiation station. Further variation of the properties may be obtained by variation of the intensity of the radiation of light from the light source. By appropriate choice of formulation and radiation of the pigment layer, desired properties of the pigment layer for impact printing or thermal transfer printing may be obtained. It will be appreciated that, as is well known in the art of ink ribbon manufacture, the ribbon may contain additional layers for the purpose of aiding adhering of the ink containing layer to the print receiving surface and to aid in removal of the ink layer from the substrate during the printing process.

An example of formulation of material to form the pigment layer for impact printing is as follows:-

| | |
|---|---|
| Camphorquinone | 2.0% |
| N-methyldiethanolamine | 5.0% |
| Disperbyk - 110 | 3.0% |
| Isobornyl Acrylate | 55.0% |
| Pigment (iron oxide) | 35.0% |

Disperbyk - 110 is a product supplied by Byk-Chemie GmbH. In this formulation, camphorquinone is the optically sensitive initiator.

An example of formulation of material to form the pigment layer for thermal transfer printing is as follows:-

| | |
|---|---|
| Irgacure 369 | 2.0% |
| ITX | 2.0% |
| EDB | 5.0% |
| Methyl Methacrylate | 33.5% |
| Isobornyl Acrylate | 33.5% |
| Photomer 5018 | 6.0% |
| Carboset 527 | 8.0% |
| Carbon Black | 10.0% |

Irgacure 369 is a type I optically sensitive initiator and is a product supplied by Ciba-Geigy, Photomer 5018 is a product supplied by Harcross Chemicals Ltd. and Carboset 527 is a product supplied by B.F. Goodrich. ITX is isopropoyl thioxanthanone, a type II optically sensitive initiator, and EDB is ethyl 4-dimethylaminobenzoate both products being supplied by Lambsons Limited.

When a thermal initiator is included in the matrix material, tetra-butyl perbenzoate may be used as the thermal initiator.

The matrix may include up to 5% of a multi-functional acrylate, for example mono-acrylate, di-acrylate, tetra-acrylate.

While a method in accordance with the invention for manufacturing ink ribbons for use in printing processes have been described hereinbefore, the method may also be utilised to form products comprising a substrate coated with a layer of material having properties other than those required for use in printing processes and in particular may be utilised to form a magnetic recording medium. It will be appreciated that for use as a magnetic recording medium the layer carried by the substrate contains magnetic particles but does not need to contain pigment. However the loading of the magnetic particles in the layer is still approximately 35% to 40% or higher as for the magnetic ink ribbon and results in similar impediment to penetration of the light radiation through the thickness of the layer. Furthermore, whereas in ink ribbons the portions of the ink layer are required to be readily transferred from the substrate to a print receiving surface either as the result of impact of a print element or as the result of local heating by a thermal print element, in a magnetic recording medium it is required that the layer containing the magnetic particles is robust, is strongly bonded to the substrate and does not disintegrate during use over a prolonged period in recording and reading signals on and from the medium.

It is preferred to use a formulation of matrix material which is curable by means of light in the ultra-violet portion of the spectrum and hence to use a light source emitting radiation in the ultra-violet region. However if desired formulations of matrix material sensitive to light in other portions of the spectrum to cause curing of the layer may be used, the light source being chosen to emit radiation corresponding to that required to cause curing of the matrix material.

The light source 25 extends transversely of the web of substrate 20 and light radiated by the source 25 is focussed to a line of illumination 31 on the deposited layer of material 23. It has been found that satisfactory curing of the matrix material is obtained with a light source emitting radiation in the ultra violet region of the spectrum using a source having a power of 240 watts per centimetre length of the line 31 and with a speed of feeding of the web of 1500 to 3000 cm per minute.

It will be appreciated that the substrate on which the layer of material is formed may be flexible as is the case with ink ribbons or may rigid dependent upon the use for which the product is required.

Where the term "ink" is used in this specification, this term is to understood as including materials which impart a visually recognisable appearance to a pattern or image formed thereof as well as materials which impart other properties to a pattern or image formed thereby which are recognisable by means other than visual and for example includes magnetic properties and optical properties other than properties visible in the spectrum of normal light.

## Claims

1. A method of manufacturing a substrate (20) coated with a layer of material (26) characterised by the steps of applying to a substrate (20) a layer (23) of said material in an uncured fluid state; said material having an un-cured fluid state and being capable of being cured to a non-fluid state; and subjecting the layer of said un-cured material on said substrate to light radiation from a source (25) to effect curing of the material and conversion of the layer of material from said fluid state to said non-fluid state.

2. A method as claimed in claim 1 wherein the layer (23) of the material is subjected to the action of light in the ultra-violet region of the spectrum.

3. A method of manufacturing an article comprising a substrate (20) coated on a surface thereof with a material (26) characterised by the steps of feeding the substrate (20) to and through a coating station (21); at the coating station (21) depositing a layer (23) of uniform thickness of the material on a front surface of the said substrate (20) to form a coated substrate, said material comprising a matrix in an un-cured fluid first state containing particles of a substance; feeding said coated substrate to and through an irradiation station (24); at the irradiation station (24) subjecting the layer of the material to the action of light (31) to cure the matrix and thereby convert the matrix from said first state to a cured non-fluid second state.

4. A method as claimed in claim 2 wherein the layer (23) of the material is subjected to the action of light including a component in the ultra-violet region of the spectrum.

5. A method as claimed in claim 3 wherein the particles comprise particles of an ink pigment.

6. A method as claimed in claim 3 wherein the particles comprise particles of a magnetisable substance.

7. A method as claimed in claim 3 wherein the material contains at least 10% by weight of the particles.

8. A method as claimed in claim 6 wherein the material contains at least 35% by weight of the magnetisable particles.

9. A method as claimed in claim 3 wherein the matrix includes a monomer mixed with an optically sensitive polymerisation initiator.

10. A method as claimed in claim 9 wherein the matrix includes an acrylate.

11. A method as claimed in claim 10 wherein the matrix includes up to 5% of acrylate.

12. A method as claimed in claim 10 or 11 wherein the matrix includes mono-acrylate.

13. A method as claimed in claim 9, 10 or 11 wherein the matrix includes methacrylate.

14. A method as claimed in any one of claims 9, 10, 11, 12 or 13 wherein the matrix includes a thermal initiator.

15. A method as claimed in any one of claims 3 to 14 including the step of removing heat from the coated substrate while said coated substrate is at the irradiation station (24).

16. A method as claimed in claim 15 wherein the step of removing heat from the coated substrate includes the step of maintaining a rear surface of said substrate in heat transfer engagement with a heat sink.

17. A method as claimed in claim 15 wherein the step of removing heat from the coated substrate includes the step of maintaining a rear surface of the substrate in heat transfer relationship with a peripheral surface of a rotatable heat sink roller.

18. Apparatus for manufacturing a substrate (20) coated with a layer of material (26) including a coating station (21) operable to apply to a substrate (20) a layer (23) of said material in an uncured fluid state; said material having an un-cured fluid first state and being capable of being cured to a non-fluid second state; and an irradiation station (24) operable to subject the layer (23) of said un-cured material in said first state to light radiation (31) from a source (25) to effect curing of the material and conversion of the layer (23) of material from said fluid state to said non-fluid state and feeding means (28) to feed the substrate (20) to the coating station (21) and to feed the coated substrate from the coating station to and through the irradiation station (24).

19. An ink ribbon manufactured in accordance with the method as claimed in claim 1 to 19.

20. A magnetic medium manufactured in accordance with the method as claimed in claim 1 to 19.
